# EUROPEAN PATENT SPECIFICATION

(11) **EP 4 466 582 B1**
(45) Date of publication and mention of the grant of the patent: **11.03.2026**
(21) Application number: 23701124.2
(22) Date of filing: 19.01.2023
(51) Int. Cl.: G05B 19/418

(54) **OPTIMAL CONTROL OF A DISTRIBUTED CIRCULAR MANUFACTURING SYSTEM**
OPTIMALE STEUERUNG EINES VERTEILTEN KREISFÖRMIGEN FERTIGUNGSSYSTEMS
COMMANDE OPTIMALE D'UN SYSTÈME DE FABRICATION CIRCULAIRE DISTRIBUÉ

(30) Priority: 20.01.2022 EP 22152531
(43) Date of publication of application: 27.11.2024
(73) Proprietor: BASF SE, 67056 Ludwigshafen am Rhein (DE)
(72) Inventor: SCHWABE, Henning, 67056 Ludwigshafen am Rhein (DE); BADRI, Tara, Florham Park, NJ 07932 (US); GRAF, Nicole, 67056 Ludwigshafen (DE); WOLLNY, Andreas, 67056 Ludwigshafen (DE)
(74) Representative: BASF IP Association
(86) International application number: PCT/EP2023/051221
(87) International publication number: WO 2023/139159

(56) References cited:
- US-A1- 2010 274 612
- US-A1- 2018 094 953

## Description

### FIELD OF THE INVENTION

The invention relates to an apparatus, a system comprising the apparatus, a method and a computer program product for controlling a production process of a product from a plurality of pre-products.

### BACKGROUND OF THE INVENTION

Today products are not only produced in a single production process by a single production entity but often the production of a product is spread to different production entities that can be part of the same industrial compound or can be located at completely different locations. This is in particular true in case of recycling processes in which a product is produced such that after its product life at least parts of the product can again be utilized as pre-products used again in a production of the product. Up to now the production process of such products are mainly determined and controlled based on known market and value chain rules, or based on logistics. However, for such complex production processes not only the general logistics can be challenging but also the technical controlling of such production processes can be challenging, in particular, if certain technical goals should be reached during the production. For example, in recycling processes the general technical goal is to reduce the waste produced during the whole of the production and recycling process. This goal has then a direct impact on the controlling of each production process during the production and recycling of the product.

It would therefore be advantageous if an improved control of a production process, in particular, a recycling production process, could be provided that allows to fulfil predetermined goals.

### SUMMARY OF THE INVENTION

It is an object of the present invention to provide an apparatus that allows to improve the production process of a product, in particular, produced in a recycling process.

In a first aspect of the present invention an apparatus for controlling a production process of a product produced from a plurality of pre-products, in particular, in a recycling process, is presented, according to claim 1, wherein each of the pre-products is produced by an independent production entity, wherein the apparatus comprises a) a product production data providing unit for providing expected production data indicative of the pre-products and of production parameters expected for the production of the product, b) a pre-production data receiving unit for receiving for each expected pre-product pre-production data from a plurality of independent production entities, wherein the pre-production data is indicative of pre-production parameters for the production of the respective pre-product by a respective independent production entity adapted to produce the pre-product, c) an optimization unit for determining an optimized production of the product with respect to a predetermined goal related to one or more pre-production parameters based on the production data and the pre-production data, and d) a production control unit for providing control signals for controlling the production of the product based on the determined optimized production.

Since pre-production data of expected pre-products, i.e. of products expected to be utilized during the production process, is provided, since the optimization of a production of the product is based not only on the production data but also on the pre-production data with respect to a predetermined goal and since the production of the product is controlled based on the optimized production, also the production processes of pre-products can be taken into account during the optimization process. This allows to optimize the complete production of the product and not only a part related to one production entity. Thus, the production of the product with respect to a predetermined goal can be improved.

Generally, the apparatus is adapted for controlling a production process of a product produced from a plurality of pre-products. Preferably, the production process refers to a recycling process in which at least parts of the product are, during respective recycling processes, again processed into pre-products that again can be used for producing the product. The product to be produced can refer to any product that is produced utilizing one or more pre-products. For example, the product can refer to a product that after the production is provided to a respective customer for using the product. Moreover, the product itself can be a pre-product for further products.

The apparatus is intended to be utilized for cases in which each of the pre-products of the product is produced by an independent production entity. In this respect an independent production entity refers to a production entity that produces the pre-product completely independent of the later production of the product and/or of the production of other pre-products. The independent production entity can refer to any entity that is adapted to produce a product, for instance, an industrial plant, or a part of an industrial plant. Generally, although the production entities are independent, they can be provided, for instance, on the same compound or in the same production plant. However, the independent production entities can also be located at faraway locations from each other. Moreover, the independent production entities can be controllable by the same controlling system, for example, by a controlling system controlling all production processes at a compound or of a network of production plants. However, the independent production entities can also be independent from each other with respect to controlling, i.e. can be controlled without any influence on each other by completely different controlling systems.

The product production data providing unit is adapted to provide expected production data of the product. Generally, the product production data providing unit can refer to a storage unit or it can be communicatively coupled to a storage unit on which the expected production data is stored already and can be accessed by the product production data providing unit for providing the same. However, the product production data provide unit can also refer to a receiving unit for receiving the expected production data, for instance, via an input unit into which a user can input the expected production data. The expected production data is indicative of the pre-products and of production parameters expected for the production of the product. For example, the expected production data can refer to a production recipe that indicates the pre-products that should be utilized for the production of the product and how they should be utilized. Moreover, such a production recipe can indicate production parameters that are utilized during the production. For example, the production parameters can refer to process parameters that control the process and workflow of the production. For example, production parameters can refer to a temperature, pressure, etc. utilized in a chemical reaction producing the product. Moreover, such production parameters can also refer to the amount of a pre-product that has to be utilized for the production of the product, for instance, can refer to an amount of a catalyst that has to be provided to the chemical reaction and further, for instance, at which time the catalyst has to be provided to the chemical reaction. Thus, generally production parameters refer to parameters related to the production workflow of the product.

The pre-production data receiving unit is adapted to receive for each expected pre-product pre-production data from a plurality of independent production entities. The plurality of independent production entities can be adapted to produce the same pre-product or different pre-products. However, it is preferred that at least some of the independent production entities produce the same pre-product. In this case it is to be expected that different independent production entities will produce the same pre-product under different circumstances and with respect to different pre-production parameters. Thus, the pre-production data is very likely different for all independent production entities even if the same pre-product is produced. The pre-production data is indicative of the pre-production parameters for the production of a respective pre-product by a respective independent production entity. Thus the pre-production data comprises information not only of that a specific pre-product is produced by a respective independent production entity but also how the pre-product is produced by the respective independent production entity. For example, the pre-production parameters can refer to parameters that are indicative of the controlling of a workflow of the production process of a respective pre-product. Moreover, the pre-production data can also comprise additional logistics information that can be indicative of an expected logistic of transporting of the pre-product to a location of the production entity producing the product. This additional logistics information can then also be taken into account during the optimization, which is advantageous for optimizing with respect to technical goals that are also influenced by the transportation of the pre-product, for instance, if the goal refers to a CO₂ reduction.

The optimization unit is adapted to determine an optimized production of the product with respect to a predetermined goal related to one or more pre-production parameters based on the production data and the pre-production data. Generally, the predetermined goals to which the optimization refers can refer to any goal related to one or more pre-production parameters. For example, such a predetermined goal can refer to reducing a waste production when producing the product, wherein such goal indicates that the pre-production parameters must be such that also in the pre-production waste is avoided, for instance, by utilizing respective recycling processes. In another example the predetermined goal can refer to a decreasing of the energy necessary for producing the product, wherein also in this case the predetermined goal is related to the pre-production parameters, in particular, to pre-production parameters related to a respective energy consumed for the production of a pre-product. A further example refers to a goal of CO₂ reduction which can also directly related to the pre-production parameters of a pre-product.

In a preferred embodiment, the optimization unit is adapted to first determine an optimization score for all possible production possibilities of the product, for instance, for all possible pre-products, with respect to one or more predetermined goals. The optimization score can be determined based on predetermined rules provided for the one or more predetermined goals. The predetermined goal can in this embodiment refer to a target in relation to one or more product characteristics. In a further step the optimization unit can then be adapted to select a respective production possibility for the product based on the optimization score, for instance, by selecting a production possibility with the highest or lowest optimization score, depending on the rules for determining the optimization score.

Generally, the optimization unit can be adapted to utilize any known optimization algorithm that allows the optimization of a production process with respect to a specific optimization goal. For example, optimization processes for optimizing the energy consumption during a production process by optimizing the production parameters of a product are well known. However, the optimization unit is adapted to utilize such an algorithm, for instance, by further utilizing the pre-production data and to optimize the production of the product also under the knowledge of the pre-production data. For example, the optimization unit can be adapted to optimize the production of the product for each pre-production data of the plurality of independent production entities individually and then to select the respective production entity and thus the respective pre-production parameters, for each pre-product that provides the most optimal solution with respect to the predetermined goal with respect to the production of the product.

The optimization unit can also be adapted to optimize the production of the product also with respect to more than one goal. For instance, to optimize with respect to CO₂ reduction and reduced waste production at the same time. However, in this case it is to be expected that a solution will not fulfil all goals to the same extend. This can lead to a plurality of possible solutions that fulfil one or more of the goals to different extends. In this case, the optimization unit can be adapted, for example, to utilize Pareto driven optimization methods and to determine as optimal solution for the production at least one Pareto optimal solution. Moreover, if more than one possible solution exists, the optimization unit can also be adapted to utilize predetermined prioritizations of the more than one goal to select one of the determined solutions as the optimal solution. For example, the goal of reducing CO₂ can be prioritized higher than reducing the waste production, wherein then a solution with the highest CO₂ reduction can be selected as optimal solution. Moreover, respective possible solutions can also be presented to a user and can then be selected in an interaction process with the user. For example, the user can then be presented with the different possible solutions and select one of these solutions as the optimal solution. In particular, the optimization unit can be adapted to provide a user the possibility to navigate determined Pareto optimal solutions, for example, by navigating a Pareto front comprising all Pareto optimal solutions. This allows to provide a user with an overview over all possible optimal solutions.

Moreover, the optimization of the production cannot only refer to the selecting of respective production entities that are utilized to produce the pre-product for the production of the product, but also to the optimization of the production data itself with respect to the pre-products. For example, also a timing at which respective pre-products are utilized can be optimized to optimize the production of the product with respect to the predetermined goal. In another example, the optimization process can determine that an amount of a pre-product used in the production can be reduced to optimize the product production with respect to the predetermined goal.

The production control unit is then adapted to provide control signals for controlling the production of the product based on the determined optimization production. In particular, the control signals can refer to indicating to the selected production entities the production of the pre-products, in particular, starting of the production of the pre-products for an optimally also determined delivery date of the production of the pre-products. Moreover, the control signals can refer to control signals for controlling the production parameters of the production during the production of the product, for example, to controlling the amount of a pre-product utilized at a specific time of the production of the product. Generally, the control signals can be utilized to directly or indirectly control the production of the product. For example, the control signals can be directly provided to a controlling unit of an industrial plant producing the product and are then directly implemented for controlling the production of the product accordingly. However, the control signals can also be indirectly utilized, for instance, by first providing the control signals, e.g., as control suggestions, to a user for verification, wherein in this case the user can also amend or adapt the suggested control signals. Moreover, in some cases it might be necessary that the control signals are first translated, for instance, by a respective translation algorithm or in an interaction process with the user, into signals that can be understood by a production plant producing the product.

In an embodiment, the production control unit is adapted to select a production entity for each pre-product for producing the respective pre-product based on the determined optimized production and to provide control signals indicating to the selected production entities the production of the pre-products. In particular, the determined optimized production can be indicative on which of the plurality of production entities provides a respective pre-product such that the production of the product is optimal with respect to the predetermined goal. However, in complex cases the determined optimized production can refer to more than one optimum, for instance, to a plurality of Pareto optimal solutions. In this case one of the Pareto optimal solutions can be selected by the production control unit for the providing of the control signals. For example, in addition to the determined optimized production the production control unit can be adapted to utilize further predetermined criteria for cases in when the determined optimized production comprises more than one optimal solution, in particular, with respect to the utilization of different production entities for pre-products. The additional criteria can also refer to technical criteria, for instance, expected pre-product quality, the utilizing of a preferred production method, etc., but can also refer to other criteria like logistic criteria. The control signals can then indicate to the selected production entities the production of the pre-products, in particular, when to start the production of the pre-products or which amount of pre-product should be produced. Preferably the control signals directly control the selected production entities, however, the control signals can also indirectly control the selected production entities, for instance, by notifying an operator of the selected production entities to initiate the respective control.

In an embodiment, the optimization unit further comprises an optimization token distribution unit, wherein the optimization token distribution unit is adapted to determine whether and to what extent the predetermined goal is fulfilled for pre-production parameters in the determined optimized production and to distribute the optimization tokens based on this determination to production entities contributing to the production of the product. The optimization tokens allow for an easy quantification on how successful the predetermined goal can be fulfilled by the determined optimal production. For example, if the predetermined goal refers to a reduction of the consumed energy, the optimization token distribution unit can be adapted to determine for the respective optimal solution how much energy is saved and quantify this saving of energy with respect to optimization tokens. In particular, if more than one predetermined goal should be fulfilled utilizing optimization tokens as quantification allows to quantify easily the overall fulfillment of the respective more than one goals. The conversion from the extent to which the predetermined goal has been fulfilled to optimization tokens can refer to a functional relationship, for instance, to a proportional relationship, or can be performed utilizing a transfer table in which predetermined relations between the extent and the amount of optimization tokens are predetermined and stored.

The distribution of the optimization tokens to the contributing pre-production entities involved in the production of the product comprises adding optimization tokens to a respective optimization token score of a production entity if the predetermine goal has been fulfilled and removing optimization tokens from a respective optimization token score of a production entity if the predetermined goal has not been fulfilled. For example, in some cases it might not be possible during the optimization process to completely fulfill a predetermined goal, for example, if the predetermined goal refers to reducing an energy consumption of the production by 20% the optimization with respect to the possible pre-production entities might only lead to a reduction of the energy consumption of 10%. Thus, in this example, the predetermined goal cannot be fulfilled. In this case respective tokens are removed from the optimization token score of respective production entities to quantify the general not fulfillment of the goal.

The optimization unit is adapted to optimize the production of the physical product by optimizing the optimization token score of each contributing production entity. Using this further optimization goal of optimizing the optimization tokens in the optimization process also allows for an easy criterion for quantifying the optimization process. The optimization can generally refer to a maximization or minimizing of the optimization tokens, depending on the specific realization of the optimization based on the tokens.

In an embodiment, the apparatus further comprises a universal unique identifier (UUID) generation unit adapted to generate based on production parameters and the pre-production parameters of pre-products of the product a UUID for the product. Generating a UUID for the product allows to unambiguously identify the product and also provides information on the production process of the product, in particular, on the utilized pre-products and also their production parameters. In particular, it is preferred that the UUID is generated such that it is indicative also of the extent to which the respective predetermined goal has been fulfilled. The generation of such UUIDs thus allows also in a later processing of the product, for instance, if the product itself is only again a pre-product for another product to clearly and unambiguously identify the provenance of the product without providing directly details of the production process. Moreover, utilizing UUIDs also allows, for instance, for a secure communication between production entities in untrustworthy environments. In particular, in a preferred embodiment the received pre-production data can comprise respective UUIDs of the pre-products that are then indicative of the pre-production parameters without disclosing directly all details of the pre-production parameters. The optimization unit can then be adapted to utilize UUIDs for the optimization due to their relation to the pre-production parameters. Thus, the data security between different production entities during the optimization process can be increased.

Preferably, the apparatus further comprises a component tree generation unit for generating a component tree based on the UUIDs for the product and the pre-products of the product, wherein the component tree is indicative of a production line of the product and the relations between the product and the pre-products. Generally, the component tree can be realized in a form of an object list or a recipe adapted to a respective product and/or pre-product. In particular, the component tree allows to provide more details with respect to the relations between the product and the pre-product and can utilize information indicated by the UUID for indicating the pre-production parameters or production parameters, respectively. Thus, the component tree allows directly and unambiguously to provide a provenance of the product. Generally, the component tree can comprise an arbitrary number of production levels, for instance, in a case of a recycling process in which each recycling of at least parts of a product provides a new layer in the componentry. In contrast thereto for products that are, after application, provided to waste the component trees comprise a finite amount of layers with the final product being the last layer and the production of the first pre-products building the first layer of the component tree. Preferably, the optimization unit is adapted to further optimize the production of the physical product based on the component tree of each pre-product. Further, taking the component tree for each pre-product into account during the optimization allows to take into account the complete production process of each pre-product and information thereof, even if no specific details of the production parameters are provided. This allows an optimization with respect to the predetermined goal throughout the complete production process even reaching, in case of a recycling process, as far as more than one recycling cycle in the past.

In a further aspect of the invention a system for controlling a production process of a product from a plurality of pre-products, in particular, in a recycling process is presented, wherein the system comprises a plurality of production entities, wherein each production entity comprises an apparatus according to any of the preceding claims, wherein the apparatus further comprises a communication unit for communicating between the different independent production entities production data and pre-production data.

Providing each of the production entities with a respective apparatus as described above allows for optimizing a production throughout the complete production chain. Moreover, providing the apparatus with a communication unit for communicating between the different independent production entities allows for an easy transfer of the data necessary for the optimization process. The communication unit can refer to any kind of communication unit allowing to transfer respective data from one to another production entity. For example, the communication can be provided in form of a network communication in which the independent production entities, in particular, the communication units of the independent production entities, are part of a closed or open network, for instance, a cloud or internet network. However, also more direct communications can be utilized depending on the location of the independent production entities.

In an embodiment, the communication unit is adapted to apply a Hash function to the production data and the pre-production data and to communicate the hashed production data and pre-production data to another production entity. Utilizing a Hash function in the communication allows in insecure environments to communicate the production data and the pre-production data not directly but indirectly, i.e. by providing the hashed production data and/or pre-production data. Since the hashed production data and pre-production data is unambiguously indicative of the underlying production data and pre-production data, the optimization unit can also utilize the hashed production data and hashed pre-production data for optimization. The utilized Hash function can refer to a known or general predetermined Hash function that is utilized by all production entities participating in the communication. This further allows to increase a security of the communication between production entities, in particular, if the communication is based on insecure environments, like the internet.

In a preferred embodiment, the system further comprises a secure environment generation unit for generating a secure common environment that is adapted for a secure communication between at least some of the production entities. Generating a secure common environment between at least some of the production entities, for instance, by utilizing direct communication ways or parts of the network that are only accessible through respective security measures, allows for an even more secure communication between the production entities, in particular, in cases in which the production and pre-production data should be communicated in more detail.

In an embodiment the apparatus comprises an optimization token distribution unit, wherein the optimization token distribution unit is adapted to provide optimization tokens to production entities that participate in a communication using the secure common environment and allow for a communication of unhashed production data and pre-production data via the secure common environment, wherein the optimization unit is adapted to perform the optimization only based on the participating production entities. Utilizing the optimization token to reward the providing of more detailed information, i.e. unhashed information, for the production and pre-production data, provides a motivation for the production entities to participate in the secure communication and to provide more details of the production of the product and the pre-products. This allows for a more accurate optimization process also in cases in which the production entities do not belong, for instance, to the same vendor.

In a further aspect of the invention a method for controlling a production process of a product produced from a plurality of pre-products, in particular, in a recycling process, is presented, according to claim 9. Preferably, the method further comprises a step of applying a Hash function to the production data and the pre-production data and of communicating the hashed production data and pre-production data to another production entity.

In a further aspect of the invention a computer program product for controlling a production process of a product from a plurality of pre-products is presented, according to claim 11, wherein the computer program product comprises program code means for causing the apparatus or system as described above, respectively, to execute the method as described above.

It shall be understood that the apparatus as described above, the system as described above, the method as described above and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF DRAWINGS

- Fig. 1: shows schematically and exemplarily in embodiment of a system comprising at least one apparatus for controlling a production process of a product produced from a plurality of pre-products,
- Fig. 2: shows schematically and exemplarily a flow chart of an embodiment of a method for controlling a production process of a product produced from a plurality of pre-products,
- Fig. 3: shows schematically and exemplarily a possible network of production entities utilizing the invention,
- Fig. 4: shows schematically and exemplarily a realization of a component tree, and
- Fig. 5: shows an exemplary model utilizable during an optimization of the production process.

### DETAILED DESCRIPTION OF EMBODIMENTS

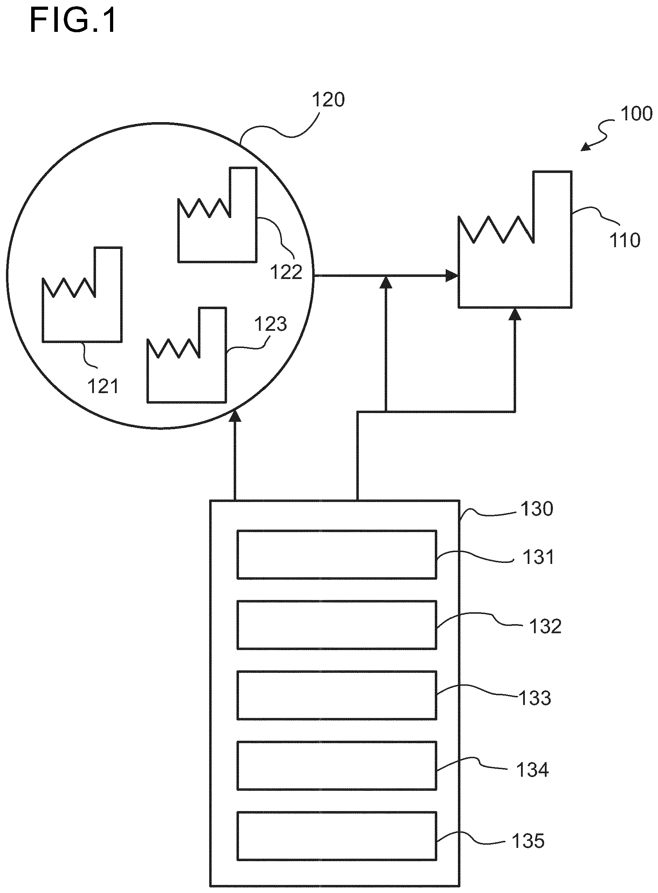

Fig. 1 shows schematically and exemplarily a system 100 comprising a production entity 110 for producing a product from a plurality of pre-products. Further, the system 100 can comprise or be communicatively coupled with a plurality of independent production entities 121, 122, 123 that can form, for instance, a network of independent production entities 120. The system 100 further comprises an apparatus 130 that can be part of or communicatively coupled with the production entity 110. Moreover, in a preferred embodiment also each of the independent production entities 121, 122, 123 comprises a similar apparatus such that the apparatuses of each production entity can also form a network. However, in other embodiments only production entity 110 comprises or is coupled to an apparatus 130.

The production entities 110, 121, 122, 123 can refer to or be part of an industrial plant. Generally, such an industrial plant can refer to any technical infrastructure that is used for an industrial purpose. An industrial purpose may be manufacturing or processing of one or more industrial products, i.e., a manufacturing process or a processing performed by the industrial plant. Preferably, the industrial purpose refers to the production of a product or pre-product. The product or pre-product can, for example, be any physical product such as a chemical, a biological, a pharmaceutical, a food, a beverage, a textile, a metal, a plastic, or a semiconductor. Additionally or alternatively, the product or pre-product can even be a service product such as electricity, heating, air conditioning, waste treatment such as recycling, chemical treatment such as breakdown or dissolution, or even incineration, etc. Accordingly, the industrial plant may be one or more of a chemical plant, a process plant, a pharmaceutical plant, a fossil fuel processing facility such as an oil and/or natural gas valve, a refinery, a petrochemical plant, a cracking plant, and the like. The industrial plant can even be any of a distillery, an incinerator, or a power plant. The industrial plant can even be a combination of any of the examples given above.

For performing a production process, the industrial plant comprises a technical infrastructure which can be controlled by production parameters implemented, for instance, by a process control system into the technical infrastructure. The technical infrastructure may comprise equipment or process units such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulveriser, a compressor, a fan, a pump, a motor, etc. Moreover, the industrial plant typically comprises a plurality of sensors that allow to measure operational parameters of the technical infrastructure. The measured operational parameters can then be stored by a process control system on a database of the industrial plant. Further, the product parameters can also be utilized by the process control system for controlling the production process in the industrial plant.

The apparatus 130 is adapted to control a production process of a product performed by the production entity 110. Preferably, the production process refers to a recycling process in which the pre-products utilized for producing the product are at least partly reused from a previous product. The apparatus 130 comprises a product production data providing unit 131, a pre-production data receiving unit 132, an optimization unit 133, and a production control unit 134. Optionally, the apparatus 130 can further comprise a communication unit 135 for communicating with other apparatuses of other production entities when present.

The product production data providing unit 131 is adapted to provide expected production data indicative of the pre-products and of production parameters expected for the production of the product. For example, the product production data providing unit 131 can communicatively be coupled, for instance, with a storage unit of the production entity 110 on which a production recipe for the product is stored, wherein the production recipe can then be provided as production data that is indicative of the pre-products and also of production parameters utilized during the production. However, the production data can also be directly provided, for instance, via an input, by a user. As already described above the production parameters can refer to any parameters that are utilized for the controlling or processing of the product production.

The pre-production data receiving unit 132 is adapted to receive for each expected pre-product pre-production data from a plurality of independent production entities. In particular, it is preferred that if a plurality of independent production entities 121, 122, 123 is adapted to produce a respective pre-product, the pre-production data from each of the independent production entities 121, 122, 123 is provided to the pre-production data receiving unit 132, for example, by utilizing a communicative coupling between the apparatus 130 and a network of the independent production entities 120. However, if a direct communicative coupling is not present the pre-production data can also be received by the pre-production receiving unit 132, for instance, via an input of a user or by accessing a storage unit in which the pre-production data is already stored. The pre-production data is indicative of respective pre-production parameters for the production of the respective pre-product by the respective independent production entity that provides the pre-production data. Accordingly, the pre-production data receiving unit 132 receives from independent production entities that are generally adapted to produce a pre-product the respective pre-production data that is utilized for producing the pre-product.

The optimization unit 133 is then adapted to determine an optimized production for the product with respective to a predetermined goal related to one or more pre-production parameters based on the production data and the pre-production data. In particular, the predetermined goal can always refer to the same goal or can be selected before the optimization, for instance, by a user via a user input. Generally, the relation of the predetermined goal to one or more pre-production parameters refers to the fact that the pre-production parameters and optionally also the production parameters influence whether the predetermined goal can be fulfilled or not. Thus, the predetermined goal is generally related to the production of the pre-products and optionally of the product itself. Preferably, the predetermined goal refers to a technical application goal like reducing a CO₂ footprint of the product, reducing an energy consumption of the overall production of the product, increasing a recyclability of the product, etc. Generally, the predetermined goal can refer to qualitative or quantitative goal. For example, the goal can be a qualitative goal referring to reducing the CO₂ footprint or a quantitative goal of reducing the CO₂ footprint by 20% with respect to a previous production of the product. The optimization unit 133 can then be adapted to utilize known production optimization methods and algorithms for trying to find an optimal solution with respect to the provided production data and the pre-production data for fulfilling the predetermined goal. In particular, also more than one predetermined goal can be taken into account during the optimization. For example, the optimization unit 133 can be adapted to utilize multi-objective optimizing methods that result in a set of optimal solutions that represent different trade-offs among objectives, i.e. predetermined goals. These solutions are also referred to as Pareto optimal solutions or Pareto optimal solution set. Design objective function space representation of the Pareto optimal solution set is known as Pareto optimal front (POF). One strategy to find Pareto optimal solutions is to convert the multi-objective optimization problem to a single objective optimization problem and then to find a single trade-off solution. In an example, the multi-objective optimizing method utilized by the optimization unit 133 can be based on a genetic algorithm, which has been demonstrated to efficiently solve multi-objective optimization problems because such an algorithm results in a diverse set of trade-off solutions in a single numerical simulation. However, in another example the optimization unit 133 can be adapted to utilize a multi-objective optimizing method based on an evolutionary algorithm, such as crossovers and/or mutations, which is used for creating future generations.

For example, the optimization unit 133 can be adapted to apply a multicriterial optimization algorithm to optimize the values of the optimization objectives y1,..., yk, i.e. the predetermined goals. The found optimal values can then be denoted by y1*,..., yk*. The individual objectives here can refer to a minimizing, maximizing, or approaching a desired target value while satisfying one or more constrains, for example, provided by the production process itself, hardware requirements, availability of pre-products, production capacities, etc. In a preferred example, the multi-objective optimizing method refers to a Pareto optimization based on a sandwiching or a hyperboxing method as described, for instance, in the article "Multi-criteria optimization in chemical process design and decision support by navigation on Pareto sets.", by Bortz M et al., Computers and Chemical Engineering, pages 60: 354-363 (2014).

In particular, the optimization unit 133 can be adapted to select, based on the results of the optimization, from the received pre-production data during the optimization process the pre-production data, and thus the corresponding production entity, that allows to fulfill the one or more predetermined goals as much as possible. Moreover, in a preferred embodiment the optimization unit 133 is further adapted to also optimize the production data of the production entity 110, for instance, with respect to the pre-production data. For example, the optimization process might indicate that using a specific independent production entity 122 for producing the pre-product corresponds to pre-production data that indicates a higher quality of the pre-product that allows to utilize less of the pre-product during the production process of the product in production entity 110. Utilizing this less amount of pre-product during the production might reduce, for instance, a CO₂ footprint as predetermined goal, even more, although, in this example, the pre-production data of the independent production entity 123 utilizes less CO₂ but produces a lower quality than independent production entity 122. Thus, taking during the optimization process the pre-production data and the production data into account and optionally also allowing for an adaptation of the production data, in particular, the production parameters, allows to optimize for a respective goal throughout the complete production chain of a product. This allows to take more variables into account and to find improve solutions with respect to the predetermined goals.

In a preferred embodiment, the optimization unit 133 further comprises an optimization token distribution unit that allows for a distribution of optimization tokens to the production entities 110, 121, 122, 123. In particular, the optimization tokens can be regarded as a quantification of whether or not the production entities that are selected for producing the product/pre-product fulfil the predetermined goal and to what extent the predetermined goal is fulfilled. For example, if the predetermined goal is a quantitative goal like reducing the amount of CO₂ by 20%, the optimization token distribution unit can determine based on the optimal solution whether this goal is fulfilled by the contributing production entities. For example, in one case the optimal solution indicates that for the production of the product the CO₂ footprint will be reduced by 30% such that the respective goal is fulfilled. In this case respective optimization tokens will be added to an optimization tokens score of the participating production entities. The amount of provided optimization tokens can be preset, for instance, by respective predetermined functions or by a lookup table that indicates the respective amount of tokens that should be provided when the goal has been met and with respective to the extent to which the goal has been met. In another case, the optimization token distributing unit might determine that the optimal solution found for this goal will only reduce the amount of CO₂ by 10%, for instance, in a case in which no better solution could have been found. In this case, the optimization token distribution unit can be adapted to determine that the goal has not been fulfilled and to what extent it has not been fulfilled and remove optimization tokens from the token scores of respective production entities that participate in the production. Thus, the optimization token score refers to a quantification on whether a production entity on the whole fulfills set predetermined goals or not. In a preferred embodiment, the optimization unit 133 further utilizes the optimization token scores of the production entities during the optimization process by further optimizing such that the optimization token scores for the production entities are optimized, in particular, maximized.

The production control unit 134 is then adapted to provide control signals for controlling the production of the product, for instance, by the production entity 110, based on the determined optimized production provided by the optimization unit 133. In particular, the determined optimized production can indicate the pre-production data and thus the respective corresponding production entity that should optimally be used for producing one or more of the pre-products for the product. Moreover, the determined optimized production can indicate respective production parameters that should be set during the production of the product in the production entity 110 for optimizing the production. The production control unit 134 can thus be adapted to provide respective control signals that indicate, for instance, the selection of the respective production entity for producing the pre-product and/or that control the respective production entity 110 to set the production parameters in accordance with a determined optimized production. The control signals can refer to signals that directly control the respective production entity, for instance, by directly initiating a start of the production of a pre-product of a specific production entity at a predetermined time point or that indirectly control the production of the product, for instance, by providing the parameters and values of the parameters that should be set to an operator of the production entity 110, wherein then the operator digitally or mechanically sets the respective parameter values for the production.

The above described process performed by the apparatus in some instances utilizes a communication between the apparatus and the production entities, for instance, for receiving the pre-production data. Such communication can be performed by the optional communication unit 135 that can be adapted to directly communicate, for instance, via a network communication, via the internet, via a secure communication, etc. with one or more of the production entities. Preferably, also the production entities 121, 122, 123 comprise an apparatus as described above, wherein in this case the communication can be provided via a communication between the respective communication units of the respective apparatuses.

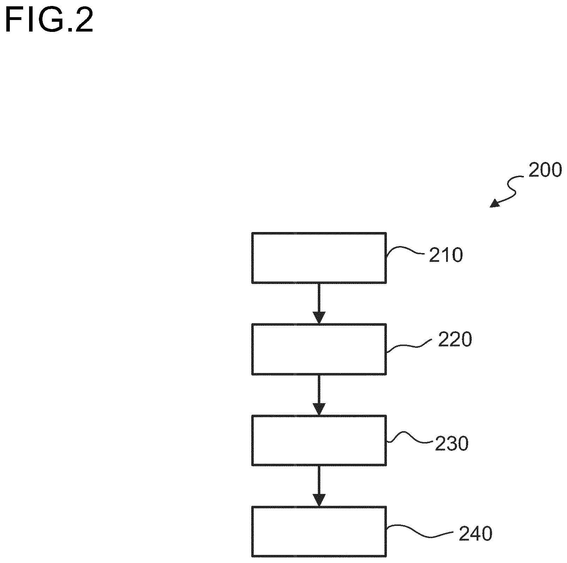

Fig. 2 shows schematically and exemplarily a flow chart of an embodiment of a method for controlling a production process of a product produced from a plurality of pre-products. Generally, the method 200 can be performed by the apparatus 130 as described above. The method 200 comprises a step 210 of providing expected production data and a step 220 of receiving for each expected pre-product pre-production data from a plurality of independent production entities, for instance, in accordance with the principles described above. Further, the method 200 comprises a step 230 of determining an optimized production of the product with respect to a predetermined goal related to one or more pre-production parameters based on the production data and the pre-production data. Moreover, the method 200 comprises a last step 240 of providing control signals for controlling the production of the product based on the determined optimized production. Generally, the method 200 refers to a computer implemented method that can be performed by any dedicated or general computing hardware.

In the following some more details of preferred embodiments of the invention will be described. In particular, the core idea of the invention refers to applying an optimization and thus allow for an optimal control of a product production, in particular, in a circular manufacturing system, distributed over several steps of a value chain, i.e. over different production entities and pre-products of the product. This can be achieved since the apparatus and the method as described above utilize also the pre-production data for the optimization which can lead to a transparent recording of the fulfilling of specific goals, for instance, related to sustainability impacts, of the different productions at the different production entities. Moreover, by tokenization of the fulfillment of respective goals, for instance, of the sustainability impacts, such information can be quantified and used as data signal also between production entities even outside a direct supply chain. In addition, the above described system provide a single system allowing for an optimal control for optimizing the production with respect to a predetermined goal, e.g., product carbon footprint, in linear and circular manufacturing. Further the invention allows for a transparency on the fulfillment of respective goals, and for utilized production chains, i.e. utilized pre-products, like material components for recycling in circular manufacturing. This further enables, for instance, to reach goals like reducing a product carbon footprint much easier, in particular, in circular distributed manufacturing systems of arbitrary size.

Current platform system designs support either sustainability impact transparency, e.g., product carbon footprint, for linear manufacturing or recycled content for recycling applications but not all use cases in a single system. In addition, access to product data is always limited to the respective production entity producing the respective product preventing data analysis of products for use cases where the composition of products has to be traced backwards up the value chain. Data on sustainability can in such cases not leave production entities thus preventing optimization of material flows outside existing supply relationships.

The above described apparatus and method solve the above problems. In particular, it is preferred that the apparatus provided in a plurality of production entities allows for a shared system of production databases and processing services, for instance, by providing the information in respective production and pre-production data. Generally, all components of the apparatus can be implemented as centrally shared by or distributed over the different production entities.

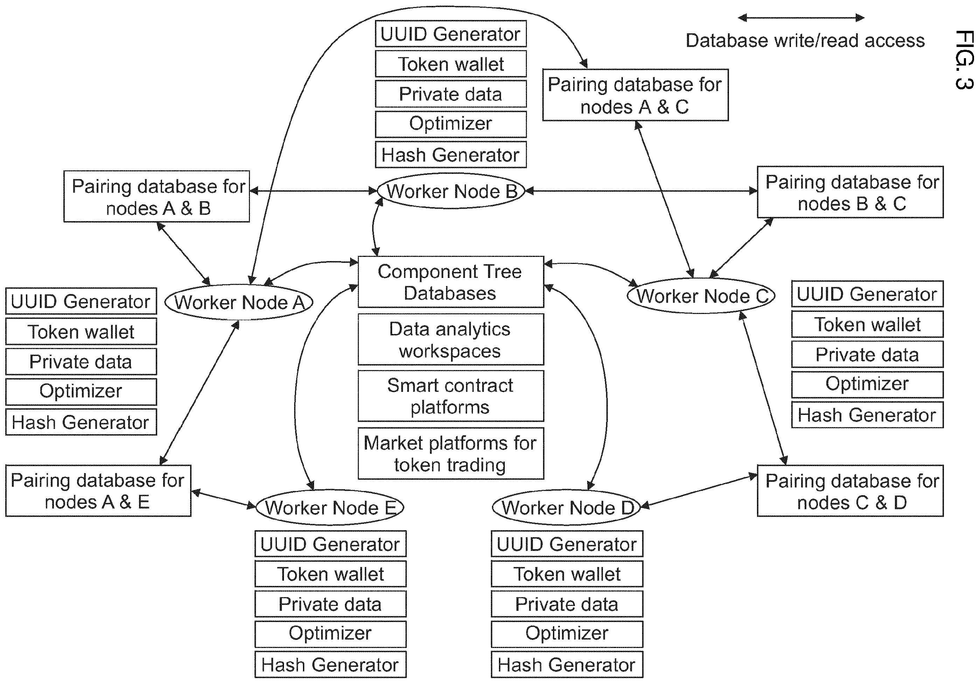

Fig. 3 shows schematically and exemplarily such sharing by illustrating connections between possible production entities taking part in the optimization of the production process of one or more products. In Fig. 3 the respective production entities are indicated as worker nodes, wherein each of the production entities can comprise an apparatus as described, for example, with respect to Fig. 1. Further, in the example, of Fig. 3 it is indicated that the apparatus comprises units providing functions like a UUID generation, a management of optimization tokens, a management of data security, an optimization of the respective production process and a generation of hash values for data provided to other entities or public databases. These functions can be provided, as described above and in the following, by one or more of the units of the apparatus, for instance, as described with respect to Fig. 1, or can be provided in form of additional units working together with one or more units of the apparatus. Further, the production entities can be connected to each other or to public or partly-public databases, for instance, for receiving or providing respective production or pre-production data with respect to other production entities. Some of the aspects shown in Fig. 3 will be described in more detail in the following.

It is generally preferred that in an embodiment the optimization unit of the apparatus is adapted to generate a component tree that can be stored on a component tree database.

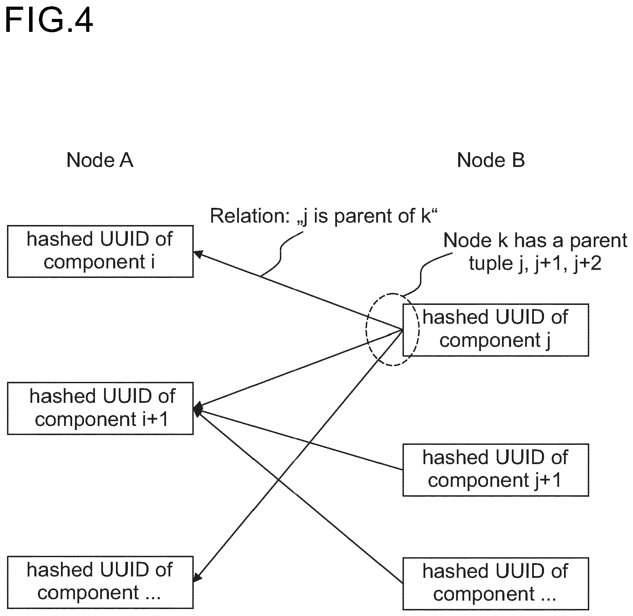

A component tree can refer in a tree or Merkel tree in which, for instance, hash values of UUIDs of products and pre-products, e.g. of manufactured components and their parent components, are stored, optionally also inclusive respective recycling process steps. The component tree preferably refers to a Merkle tree of recursively hashed tree entries. This allows to record virgin and recycled components, i.e. pre-products and products, in a single component tree that in principle expands infinitely. The component tree databases can preferably be implemented as key value store. Fig. 4 shows a schematic example of such a component tree generation by different production entities, i.e. nodes, for a product. In particular, the hashed UUIDs of different components, i.e. pre-products, with different relations are exchanged between the production entities and based on the respective relations a component tree for each product can be generated.

Moreover, the communication unit can be adapted to provide a pairing database that is adapted to hold data records of pairing IDs between different production entities, optionally, including possible recycling steps, and the UUIDs for the products of this pairing. Generally, a pairing refers to production entities that are connected through the production of a product. For example, a first production entity producing a pre-product utilized by a second production entity for producing a product refer to a pairing which can be provided, for instance, by the communication unit with a respective pairing ID. Further it is preferred that the pairing ID also comprises a sustainability impact for each component, i.e. product or pre-product, that is produced by the pairing, i.e. the respectively paired production entities. Utilizing pairing IDs allows for an effective coordination of supply chains, due to knowledge on already existing combinations and information on the result of such a combination. For example, a pairing ID can indicate that a certain combination of production entities is reliable when providing a respective pre-product and further produces the pre-product under certain conditions indicated by the UUID. Thus based on this information a possible supply chain can be easily determined.

Moreover, preferably, each generated UUID for a product or pre-product comprises a plurality of information, relating to one or more of physical and virtual attributes, e.g., volume, mass fraction of recycled material, etc., a certificate of analysis, a specified sustainability impact, e.g., carbon footprint, and a certificate ID of impact. In this context, the term "impact" is regarded as referring to a fulfillment of a respective technical goal, which preferably refers to a sustainability goal like CO₂ reduction. Preferably, a UUID for a product or pre-product is generated, for instance, by a UUID generation unit of the apparatus, for each product based on at least one of batch, lot, and serial number for each pre-product recorded in a component tree and/or pairing database of a product. Moreover, a UUID for a product can be generated based on standards such as DIN 91406. Preferably, hashed UUIDs are stored in the pairing database to avoid the need for repeated hashing during each product data analysis or optimization run. The pairing databases can generally be implemented as wide-column store with bilateral shared access via Diffie-Hellman key exchange.

In an embodiment it is preferred that the apparatus further comprises a secure environment generation unit that is adapted to generate a secure communication environment for the communication between the production entities. Preferably, the data analysis and, in particular, optimization, is executed in secure communication environment, for instance, a trusted computing environment (TCE) in which the production entities can collaborate via automated consensus scripts to analysis and optimize the product production. Preferably, participating production entities are prohibited from introducing own computer code or from copying data outside the TCE.

The solution, as described, for example, with respect to the apparatus, can be regarded as forming a digital operating system for an orchestration of a low-carbon circular economy that aims for sustainability impact reduction as an equal aim next to economic benefit. As such in can be used to orchestrate a production of a product like battery materials recycling or it can provide the basis for a digital product service for a circular economy in materials and chemicals.

In a preferred embodiment, the apparatus is part of an application that can be run on a shared digital platform that can be accessed by each production entity, for instance, via a standardized software interface, like a set of platform-based APIs or the Gaia-X / IDS connector software module.

The preferably utilized optimization tokens and UUIDs can also be used in additional advantageous applications. For example, hashed UUIDs of a respective product for which the optimization tokens are provided can be attached to the respective optimization tokens, e.g. being non-fungible Tokens, for example, via Smart Contract. Moreover, missing values in a production data, e.g., missing product carbon footprint, supplied by production entities can be penalized by being set equal to largest possible missing of the respective goal during the optimization, using, for instance, the optimization tokens. Therefore, production entities not sending all data for optimization risk no being selected for the manufacturing of the product.

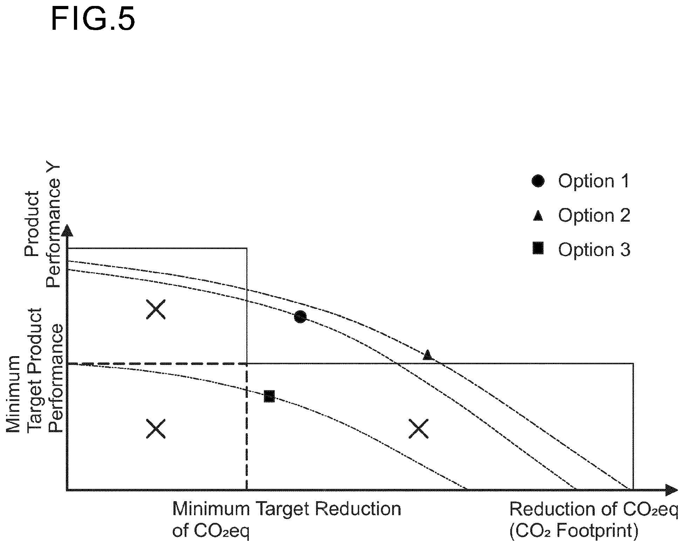

In a preferred embodiment the optimization unit is adapted to utilize maximum impact reduction benefit (MIRB) models for a given product or production process during the optimization. A MIRB model describes product performance referring, for instance, to product or production process constrains, depending on the reduction of a sustainability impact metric, for example, measured as impact per kg produced product. A typical example is a product carbon footprint of the product or a carbon intensity measured also in kg product per kg CO2. Generally, the boundaries and conditions of an MIRB model can depend on the applicable standards for life cycle assessment and product category rules for the given product or production process. An exemplary and schematic example for such a MIRB model represented as a graph is shown in Fig. 5 for different production process options. Regions of the graph with an "x" refer to regions that are not realizable due to one or more constraints in the production process. The curves can be regarded as Pareto curves for the different options.

A MIRB model can be created, for example, by statistical analysis tools. Generally, data on product performance and on sustainability impacts with respect to a sustainability goal, can be collected, plotted and fitted against relevant independent design variables, for example, type of technology, location of production entity, source of energy, settings of process parameters, etc. Moreover, a MIRB model can also be created, for example, by first principle models where a product performance and sustainability impacts are calculated from scientific - technical models of production processes over a range of independent model parameters or design variables, including reaction chemistry models, thermodynamic models, engineering models, biotransformation/fermentation models, etc.

The resulting MIRB model can then be used, for example, by the optimization unit as already described above, in a Pareto type multi-objective optimization to calculate the Pareto boundary. The Pareto boundary of a MIRB model describes maximum product benefit versus maximum impact reduction. Generally, in the MIRB model the product performance can also be replaced with another sustainability impact, for example land loss or water usage. The resulting, Pareto optimization can then also be extended from two to n dimensions and respective n dimensional MIRB models can be generated in utilized for such cases.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the production and/or pre-production data, the determining of an optimized production, the providing of control signals, etc., performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to an apparatus for controlling a production process of a product produced from a plurality of pre-products, in particular, in a recycling process. A providing unit provides expected production data indicative of the pre-products and of production parameters expected for the production of the product. A receiving unit receives for each expected pre-product pre-production data from a plurality of independent production entities. An optimization unit determines an optimized production of the product with respect to a predetermined goal related to one or more pre-production parameters based on the production data and the pre-production data. A control unit provides control signals for controlling the production of the product based on the determined optimized production.

## Claims

1. An apparatus for controlling a production process of a product produced from a plurality of pre-products, in particular, in a recycling process, wherein each of the pre-products is produced by an independent production entity (110, 121, 122, 123), wherein the apparatus (130) comprises:
a product production data providing unit (131) for providing expected production data indicative of the pre-products and of production parameters expected for the production of the product,
a pre-production data receiving unit (132) for receiving for each expected pre-product pre-production data from a plurality of independent production entities, wherein the pre-production data is indicative of pre-production parameters for the production of the respective pre-product by a respective independent production entity (110, 121, 122, 123) adapted to produce the pre-product,
an optimization unit (133) for determining an optimized production of the product with respect to a predetermined goal related to one or more pre-production parameters based on the production data and the pre-production data, and
a production control unit (134) for providing control signals for controlling the production of the product based on the determined optimized production,
**characterised in that** the optimization unit (133) further comprises an optimization token distribution unit, wherein the optimization token distribution unit is adapted to determine whether and to what extent the predetermined goal is fulfilled for pre-production parameters in the determined optimized production and to distribute optimization tokens based on this determination to production entities contributing to the production of the product, wherein the optimization tokens are a quantification of whether or not a production entity fulfils the predetermined goal and to what extent the predetermined goal is fulfilled,
wherein the distribution of the optimization tokens to the contributing pre-production entities involved in the production of the product comprises adding optimization tokens to a respective optimization token score of a production entity (110, 121, 122, 123) if the predetermine goal has been fulfilled and removing optimization tokens from a respective optimization token score of a production entity (110, 121, 122, 123) if the predetermined goal has not been fulfilled,
wherein the optimization unit (133) is adapted to optimize the production of the physical product by optimizing the optimization token score of each contributing production entity (110, 121, 122, 123), and
wherein the production control unit (134) is adapted to select a production entity (110, 121, 122, 123) for each pre-product for producing the respective pre-product based on the determined optimized production and to provide control signals indicating to the selected production entities the production of the pre-products.

2. The apparatus according to claim 1, wherein the apparatus (130) further comprises a universal unique identifier (UUID) generation unit adapted to generate based on production parameters and the pre-production parameters of pre-products of the product a UUID for the product.

3. The apparatus according to claim 2, wherein the apparatus (130) further comprises a component tree generation unit for generating a component tree based on the UUIDs for the product and the pre-products of the product, wherein the component tree is indicative of a production line of the product and the relations between the product and the pre-products.

4. The apparatus according to claim 3, wherein the optimization unit (133) is adapted to further optimize the production of the physical product based on the component tree of each pre-product.

5. A system for controlling a production process of a product from a plurality of pre-products, in particular, in a recycling process, wherein the system (100) comprises a plurality of production entities, wherein each production entity (110, 121, 122, 123) comprises an apparatus (130) according to any of the preceding claims, wherein the apparatus (130) further comprises a communication unit (135) for communicating between the different independent production entities production data and pre-production data.

6. The system according to claim 5, wherein the communication unit (135) is adapted to apply a Hash function to the production data and the pre-production data and to communicate the hashed production data and pre-production data to another production entity. (110, 121, 122, 123).

7. The system according to any of claims 5 and 6, wherein the apparatus (130) further comprises a secure environment generation unit for generating a secure common environment that is adapted for a secure communication between at least some of the production entities.

8. The system according to claim 7, wherein the optimization token distribution unit is adapted to provide optimization tokens to production entities that participate in a communication using the secure common environment and allow for a communication of unhashed production data and pre-production data via the secure common environment, wherein the optimization unit (133) is adapted to perform the optimization only based on the participating production entities.

9. A method for controlling a production process of a product produced from a plurality of pre-products, in particular, in a recycling process, wherein each of the pre-products is produced by an independent production entity (110, 121, 122, 123), wherein the method (200) comprises:
providing (210) expected production data indicative of the pre-products and of production parameters expected for the production of the product,
receiving (220) for each expected pre-product pre-production data from a plurality of independent production entities, wherein the pre-production data is indicative of pre-production parameters for the production of the respective pre-product by a respective independent production entity (110, 121, 122, 123) adapted to produce the pre-product,
determining (230) an optimized production of the product with respect to a predetermined goal related to one or more pre-production parameters based on the production data and the pre-production data, and
providing (240) control signals for controlling the production of the product based on the determined optimized production,
**characterised in that**
the method further comprises determining whether and to what extent the predetermined goal is fulfilled for pre-production parameters in the determined optimized production and distributing optimization tokens based on this determination to production entities contributing to the production of the product, wherein the optimization tokens are a quantification of whether or not a production entity that is selected for producing the pre-product fulfils the predetermined goal and to what extent the predetermined goal is fulfilled,
wherein the distribution of the optimization tokens to the contributing pre-production entities involved in the production of the product comprises adding optimization tokens to a respective optimization token score of a production entity (110, 121, 122, 123) if the predetermine goal has been fulfilled and removing optimization tokens from a respective optimization token score of a production entity (110, 121, 122, 123) if the predetermined goal has not been fulfilled,
wherein the production of the physical product is optimized by optimizing the optimization token score of each contributing production entity (110, 121, 122, 123), and
wherein the method comprises selecting a production entity (110, 121, 122, 123) for each pre-product for producing the respective pre-product based on the determined optimized production and to provide control signals indicating to the selected production entities the production of the pre-products.

10. The method according to claim 9, wherein the method (200) further comprises a step of applying a Hash function the production data and the pre-production data and of communicating the hashed production data and pre-production data to another production entity (110, 121, 122, 123).

11. A computer program product for controlling a production process of a product from a plurality of pre-products, wherein the computer program product comprises program code means for causing the apparatus (130) or system (100) of claim 1 or 5, respectively, to execute the method according to claim 9.

## Patentansprüche

1. Einrichtung zum Steuern eines Produktionsprozesses eines Produkts, das aus einer Vielzahl von Vorprodukten, insbesondere in einem Recyclingprozess, produziert wird, wobei jedes der Vorprodukte von einer unabhängigen Produktionsentität (110, 121, 122, 123) produziert wird, wobei die Einrichtung (130) umfasst:
eine Bereitstellungseinheit für Produktproduktionsdaten (131) zum Bereitstellen von erwarteten Produktionsdaten, welche die Vorprodukte anzeigen, und von Produktionsparametern, die für die Produktion des Produkts erwartet werden,
eine Vorproduktionsdatenempfangseinheit (132) zum Empfangen von Vorproduktionsdaten für jedes erwartete Vorprodukt von einer Vielzahl von unabhängigen Produktionsentitäten, wobei die Vorproduktionsdaten Vorproduktionsparameter für die Produktion des jeweiligen Vorprodukts durch eine jeweilige unabhängige Produktionsentität (110, 121, 122, 123) anzeigen, die zum Produzieren des Vorprodukts ausgelegt ist,
eine Optimierungseinheit (133) zum Ermitteln einer optimierten Produktion des Produkts in Bezug auf ein vorbestimmtes Ziel, das, basierend auf den Produktionsdaten und den Vorproduktionsdaten, mit einem oder mehreren Vorproduktionsparametern in Beziehung steht, und
eine Produktionssteuereinheit (134) zum Bereitstellen von Steuersignalen für ein Steuern der Produktion des Produkts basierend auf der ermittelten optimierten Produktion,
**dadurch gekennzeichnet, dass**
die Optimierungseinheit (133) ferner eine Verteilungseinheit für Optimierungs-Tokens umfasst, wobei die Verteilungseinheit für Optimierungs-Tokens ausgelegt ist zum Ermitteln, ob und in welchem Ausmaß das vorbestimmte Ziel für Vorproduktionsparameter in der ermittelten optimierten Produktion erfüllt wird, und zum Verteilen von Optimierungs-Tokens basierend auf dieser Ermittlung an die Produktionsentitäten, die an der Produktion des Produkts teilnehmen, wobei die Optimierungs-Tokens eine Quantifizierung sind, ob eine Produktionsentität das vorbestimmte Ziel erfüllt oder nicht und bis zu welchem Ausmaß das vorbestimmte Ziel erfüllt wird,
wobei die Verteilung der Optimierungs-Tokens an die teilnehmenden Vorproduktionsentitäten, die in die Produktion des Produkts eingebunden sind, ein Hinzufügen von Optimierungs-Tokens zu einer jeweiligen Optimierungs-Token-Bewertung einer Produktionsentität (110, 121, 122, 123), wenn das vorbestimmte Ziel erfüllt wurde, und ein Entfernen von Optimierungs-Tokens aus einer jeweiligen Optimierungs-Token-Bewertung einer Produktionsentität (110, 121, 122, 123) umfasst, wenn das vorbestimmte Ziel nicht erfüllt wurde,
wobei die Optimierungseinheit (133) ausgelegt ist zum Optimieren der Produktion des physischen Produkts, indem die Optimierungs-Token-Bewertung von jeder teilnehmenden Produktionsentität (110, 121, 122, 123) optimiert wird, und
wobei die Produktionssteuereinheit (134) ausgelegt ist zum Auswählen einer Produktionsentität (110, 121, 122, 123) für jedes Vorprodukt zum Produzieren des jeweiligen Vorprodukts basierend auf der ermittelten optimierten Produktion und zum Bereitstellen von Steuersignalen, die den ausgewählten Produktionsentitäten die Produktion der Vorprodukte anzeigen.

2. Einrichtung nach Anspruch 1, wobei die Einrichtung (130) ferner eine Erzeugungseinheit für universelle eindeutige Kennungen (UUID) umfasst, die ausgelegt ist zum Erzeugen, basierend auf den Produktionsparametern und den Vorproduktionsparametern der Vorprodukte des Produkts, einer UUID für das Produkt.

3. Einrichtung nach Anspruch 2, wobei die Einrichtung (130) ferner eine Komponentenbaumerzeugungseinheit zum Erzeugen eines Komponentenbaums basierend auf den UUIDs für das Produkt und die Vorprodukte des Produkts umfasst, wobei der Komponentenbaum eine Produktionslinie des Produkts und die Beziehungen zwischen dem Produkt und den Vorprodukten anzeigt.

4. Einrichtung nach Anspruch 3, wobei die Optimierungseinheit (133) ausgelegt ist zum weiteren Optimieren der Produktion des physischen Produkts basierend auf dem Komponentenbaum für jedes Vorprodukt.

5. System zum Steuern eines Produktionsprozesses eines Produkts aus einer Vielzahl von Vorprodukten, insbesondere in einem Recyclingprozess, wobei das System (100) eine Vielzahl von Produktionsentitäten umfasst, wobei jede Produktionsentität (110, 121, 122, 123) eine Einrichtung (130) nach einem der vorhergehenden Ansprüche umfasst, wobei die Einrichtung (130) ferner eine Kommunikationseinheit (135) zum Kommunizieren von Produktionsdaten und Vorproduktionsdaten zwischen den verschiedenen unabhängigen Produktionsentitäten umfasst.

6. System nach Anspruch 5, wobei die Kommunikationseinheit (135) ausgelegt ist zum Anwenden einer Hashfunktion auf die Produktionsdaten und die Vorproduktionsdaten und zum Kommunizieren der gehashten Produktionsdaten und Vorproduktionsdaten zu einer anderen Produktionsentität. (110, 121, 122, 123).

7. System nach einem der Ansprüche 5 und 6, wobei die Einrichtung (130) ferner eine Erzeugungseinheit für sichere Umgebungen umfasst, um eine gemeinsame sichere Umgebung zu erzeugen, die ausgelegt ist für eine sichere Kommunikation zwischen mindestens einigen der Produktionsentitäten.

8. System nach Anspruch 7, wobei die Verteilungseinheit für Optimierungs-Tokens ausgelegt ist zum Bereitstellen von Optimierungs-Tokens für die Produktionsentitäten, die an einer Kommunikation unter Verwendung der sicheren gemeinsamen Umgebung teilnehmen, und zum Erlauben einer Kommunikation von nicht gehashten Produktionsdaten und Vorproduktionsdaten über die sichere gemeinsame Umgebung, wobei die Optimierungseinheit (133) ausgelegt ist, die Optimierung nur basierend auf den teilnehmenden Produktionsentitäten durchzuführen.

9. Verfahren zum Steuern eines Produktionsprozesses eines Produkts, das aus einer Vielzahl von Vorprodukten, insbesondere in einem Recyclingprozess, produziert wird, wobei jedes der Vorprodukte von einer unabhängigen Produktionsentität (110, 121, 122, 123) produziert wird, wobei das Verfahren (200) umfasst:
Bereitstellen (210) von erwarteten Produktionsdaten, welche die Vorprodukte anzeigen, und von Produktionsparametern, die für die Produktion des Produkts erwartet werden,
Empfangen (220) von Vorproduktionsdaten für jedes erwartete Vorprodukt von einer Vielzahl von unabhängigen Produktionsentitäten, wobei die Vorproduktionsdaten Vorproduktionsparameter für die Produktion des jeweiligen Vorprodukts durch eine jeweilige unabhängige Produktionsentität (110, 121, 122, 123) anzeigen, die ausgelegt ist zum Produzieren des Vorprodukts,
Ermitteln (230) einer optimierten Produktion des Produkts in Bezug auf ein vorbestimmtes Ziel, das, basierend auf den Produktionsdaten und den Vorproduktionsdaten, mit einem oder mehreren Vorproduktionsparametern in Beziehung steht, und
Bereitstellen (240) von Steuersignalen für ein Steuern der Produktion des Produkts basierend auf der ermittelten optimierten Produktion,
**dadurch gekennzeichnet, dass**
das Verfahren ferner ein Ermitteln, ob und in welchem Ausmaß das vorbestimmte Ziel für Vorproduktionsparameter in der ermittelten optimierten Produktion erfüllt wird, und ein Verteilen von Optimierungs-Tokens basierend auf dieser Ermittlung an die Produktionsentitäten umfasst, die an der Produktion des Produkts teilnehmen, wobei die Optimierungs-Tokens eine Quantifizierung sind, ob eine Produktionsentität, die zum Produzieren des Vorprodukts gewählt wird, das vorbestimmte Ziel erfüllt oder nicht und bis zu welchem Ausmaß das vorbestimmte Ziel erfüllt wird,
wobei die Verteilung der Optimierungs-Tokens an die teilnehmenden Vorproduktionsentitäten, die in die Produktion des Produkts eingebunden sind, ein Hinzufügen von Optimierungs-Tokens zu einer jeweiligen Optimierungs-Token-Bewertung einer Produktionsentität (110, 121, 122, 123), wenn das vorbestimmte Ziel erfüllt wurde, und ein Entfernen von Optimierungs-Tokens aus einer jeweiligen Optimierungs-Token-Bewertung einer Produktionsentität (110, 121, 122, 123) umfasst, wenn das vorbestimmte Ziel nicht erfüllt wurde,
wobei die Produktion des physischen Produkts optimiert wird, indem die Optimierungs-Token-Bewertung von jeder teilnehmenden Produktionsentität (110, 121, 122, 123) optimiert wird, und
wobei das Verfahren ein Auswählen einer Produktionsentität (110, 121, 122, 123) für jedes Vorprodukt zum Produzieren des jeweiligen Vorprodukts basierend auf der ermittelten optimierten Produktion und ein Bereitstellen von Steuersignalen umfasst, die den ausgewählten Produktionsentitäten die Produktion der Vorprodukte anzeigen.

10. Verfahren nach Anspruch 9, wobei das Verfahren (200) ferner einen Schritt eines Anwendens einer Hashfunktion auf die Produktionsdaten und die Vorproduktionsdaten und einen Schritt eines Kommunizierens der gehashten Produktionsdaten und Vorproduktionsdaten zu einer anderen Produktionsentität (110, 121, 122, 123) umfasst.

11. Computerprogrammprodukt zum Steuern eines Produktionsprozesses eines Produkts aus einer Vielzahl von Vorprodukten, wobei das Computerprogrammprodukt ein Programmcodeelement umfasst, um die Einrichtung (130) oder das System (100) nach Anspruch 1 bzw. 5 zu veranlassen, das Verfahren nach Anspruch 9 auszuführen.

## Revendications

1. Appareil pour contrôler un processus de production d'un produit fabriqué à partir d'une pluralité de préproduits, en particulier au cours d'un processus de recyclage, chacun des préproduits étant produit par une entité de production indépendante (110, 121, 122, 123), l'appareil (130) comprenant :
une unité de fourniture de données de production de produit (131) permettant de fournir les données de production attendues indicatives des préproduits et des paramètres de production attendus pour la production du produit,
une unité de réception de données de préproduction (132) destinée à recevoir, pour chaque préproduit attendu, des données de préproduction d'une pluralité d'entités de production indépendantes, les données de préproduction étant indicatives de paramètres de préproduction pour la production du préproduit respectif par une entité de production indépendante respective (110, 121, 122, 123) adaptée pour produire le préproduit,
une unité d'optimisation (133) pour déterminer une production optimisée du produit par rapport à un objectif prédéterminé lié à un ou plusieurs paramètres de préproduction sur la base des données de production et des données de préproduction, et
une unité de contrôle de production (134) pour fournir des signaux de contrôle de la production du produit à partir de la production optimisée déterminée,
**caractérisé en ce que**
l'unité d'optimisation (133) comprend en outre une unité de distribution de jetons d'optimisation, l'unité de distribution de jetons d'optimisation étant propre à déterminer si, et dans quelle mesure, l'objectif prédéterminé est atteint pour des paramètres de préproduction dans la production optimisée déterminée et à distribuer des jetons d'optimisation sur la base de cette détermination aux entités de production contribuant à la production du produit, les jetons d'optimisation étant une quantification indiquant si une entité de production remplit ou non l'objectif prédéterminé et dans quelle mesure l'objectif prédéterminé est atteint,
la distribution des jetons d'optimisation aux entités de préproduction contributrices impliquées dans la production du produit comprenant l'ajout de jetons d'optimisation à un score de jetons d'optimisation respectif d'une entité de production (110, 121, 122, 123) si l'objectif prédéterminé a été atteint et le retrait de jetons d'optimisation d'un score de jetons d'optimisation respectif d'une entité de production (110, 121, 122, 123) si le but prédéterminé n'a pas été atteint, l'unité d'optimisation (133) étant adaptée pour optimiser la production du produit physique en optimisant le score de jetons d'optimisation de chaque entité de production contributive (110, 121, 122, 123), et
l'unité de contrôle de production (134) étant adaptée pour sélectionner une entité de production (110, 121, 122, 123) pour chaque préproduit afin de produire le préproduit respectif sur la base de la production optimisée déterminée et pour fournir des signaux de commande indiquant aux entités de production sélectionnées la production des préproduits.

2. Appareil selon la revendication 1, dans lequel l'appareil (130) comprend en outre une unité de génération d'identificateur unique universel (UUID) adaptée pour générer, sur la base des paramètres de production et des paramètres de préproduction de préproduits du produit, un UUID pour le produit.

3. Appareil selon la revendication 2, dans lequel l'appareil (130) comprend en outre une unité de génération d'arbre de composants pour générer un arbre de composants sur la base des UUID pour le produit et les préproduits du produit, l'arbre de composants est indicatif d'une ligne de production du produit et des relations entre le produit et les préproduits.

4. Appareil selon la revendication 3, dans lequel l'unité d'optimisation (133) est adaptée pour optimiser davantage la production du produit physique sur la base de l'arbre de composants de chaque préproduit.

5. Système pour contrôler un processus de production d'un produit à partir d'une pluralité de préproduits, en particulier dans un processus de recyclage, le système (100) comprenant une pluralité d'entités de production, chaque entité de production (110, 121, 122, 123) comprenant un appareil (130) selon l'une quelconque des revendications précédentes, l'appareil (130) comprenant en outre une unité de communication (135) pour communiquer des données de production et des données de préproduction entre les différentes entités de production indépendantes.

6. Système selon la revendication 5, dans lequel l'unité de communication (135) est adaptée pour appliquer une fonction de hachage aux données de production et aux données de préproduction et pour communiquer les données de production hachées et les données de préproduction hachées à une autre entité de production (110, 121, 122, 123).

7. Système selon l'une quelconque des revendications 5 et 6, dans lequel l'appareil (130) comprend en outre une unité de génération d'environnement sécurisé pour générer un environnement commun sécurisé qui est adapté pour une communication sécurisée entre au moins certaines des entités de production.

8. Système selon la revendication 7, dans lequel l'unité de distribution de jetons d'optimisation est adaptée pour fournir des jetons d'optimisation à des entités de production qui participent à une communication en utilisant l'environnement commun sécurisé et permettre une communication de données de production non hachées et de données de préproduction non hachées par l'intermédiaire de l'environnement commun sécurisé, l'unité d'optimisation (133) étant adaptée pour effectuer l'optimisation uniquement sur la base des entités de production participantes.

9. Procédé de contrôle d'un processus de production d'un produit fabriqué à partir d'une pluralité de préproduits, en particulier au cours d'un processus de recyclage, chacun des préproduits étant produit par une entité de production indépendante (110, 121, 122, 123), le procédé (200) comprenant les étapes suivantes :
fournir (210) des données de production attendues indicatives des préproduits et des paramètres de production attendus pour la production du produit,
recevoir (220), pour chaque préproduit attendu, des données de préproduction d'une pluralité d'entités de production indépendantes, les données de préproduction étant indicatives de paramètres de préproduction pour la production du préproduit respectif par une entité de production indépendante respective (110, 121, 122, 123) adaptée pour produire le préproduit,
déterminer (230) une production optimisée du produit par rapport à un objectif prédéterminé lié à un ou plusieurs paramètres de préproduction sur la base des données de production et des données de préproduction, et
fournir (240) des signaux de contrôle pour contrôler la production du produit sur la base de la production optimisée déterminée,
**caractérisé en ce que**
le procédé comprend en outre de déterminer si, et dans quelle mesure, l'objectif prédéterminé est atteint pour des paramètres de préproduction dans la production optimisée déterminée et de distribuer des jetons d'optimisation sur la base de cette détermination à des entités de production contribuant à la production du produit, les jetons d'optimisation étant une quantification indiquant si une entité de production sélectionnée pour produire le préproduit remplit ou non l'objectif prédéterminé et dans quelle mesure l'objectif prédéterminé est atteint,
la distribution des jetons d'optimisation aux entités de préproduction contributrices impliquées dans la production du produit comprenant l'ajout de jetons d'optimisation à un score de jetons d'optimisation respectif d'une entité de production (110, 121, 122, 123) si l'objectif prédéterminé a été atteint et le retrait de jetons d'optimisation d'un score de jetons d'optimisation respectif d'une entité de production (110, 121, 122, 123) si le but prédéterminé n'a pas été atteint, la production du produit physique étant optimisée en optimisant le score de jetons d'optimisation de chaque entité de production contributrice (110, 121, 122, 123), et
le procédé comprenant de sélectionner une entité de production (110, 121, 122, 123) pour chaque préproduit afin de produire le préproduit respectif sur la base de la production optimisée déterminée et fournir des signaux de commande indiquant aux entités de production sélectionnées la production des préproduits.

10. Procédé selon la revendication 9, le procédé (200) comprenant en outre une étape consistant à appliquer une fonction de hachage aux données de production et aux données de préproduction et à communiquer les données de production hachées et les données de préproduction hachées à une autre entité de production (110, 121, 122, 123).

11. Produit programme informatique destiné à contrôler un processus de production d'un produit à partir d'une pluralité de préproduits, le produit programme informatique comprenant des moyens de code de programme pour amener l'appareil (130) ou le système (100) selon la revendication 1 ou la revendication 5, respectivement, à exécuter le procédé selon la revendication 9.
